(19) **Europäisches Patentamt / European Patent Office / Office européen des brevets**

(11) **EP 1 484 836 B1**

(12) **FASCICULE DE BREVET EUROPEEN**

(45) Date de publication et mention de la délivrance du brevet:
**15.08.2018 Bulletin 2018/33**

(51) Int Cl.:
***H02P 21/05*** *(2006.01)*

(21) Numéro de dépôt: **04291365.7**

(22) Date de dépôt: **01.06.2004**

(54) **Procédé et système de régulation du couple électromagnétique moyen d'une machine électrique tournante**

Prozess und System zur Regelung des mittleren elektromagnetischen Drehmomentes einer rotierenden elektrischen Maschine

Process and system for controlling the average electromagnetic torque of a rotating electric machine

(84) Etats contractants désignés:
**AT BE BG CH CY CZ DE DK EE ES FI FR GB GR HU IE IT LI LU MC NL PL PT RO SE SI SK TR**

(30) Priorité: **02.06.2003 FR 0306633**

(43) Date de publication de la demande:
**08.12.2004 Bulletin 2004/50**

(73) Titulaire: **ALSTOM Transport Technologies**
**93400 Saint-Ouen (FR)**

(72) Inventeurs:
- **Benchaib, Abdelkrim**
  **78180 Montigny-le-Bretonneux (FR)**
- **Thomas, Jean-Luc**
  **77300 Fontainebleau (FR)**
- **Poullain, Serge**
  **91290 Arpajon (FR)**
- **Alacoque, Jean-Claude**
  **69360 Communay (FR)**
- **Bonin, Eric**
  **38200 Jardin (FR)**

(74) Mandataire: **Lavoix**
**2, place d'Estienne d'Orves**
**75441 Paris Cedex 09 (FR)**

(56) Documents cités:
EP-A- 1 211 798   EP-A- 1 292 011
EP-A1- 1 233 506   US-A- 5 619 114

- OLESCHUK V ET AL: "Synchronized pulsewidth modulation for different control regimes of AC drives", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. 2, 5 November 2002 (2002-11-05), pages 1416-1421, XP010632913, DOI: 10.1109/IECON.2002.1185485 ISBN: 978-0-7803-7474-4
- TAKAO KAWABATA ET AL: "DEAD BEAT CONTROL OF THREE PHASE PWM INVERTER", IEEE TRANSACTIONS ON POWER ELECTRONICS, IEEE SERVICE CENTER, PISCATAWAY, NJ, US, vol. 5, no. 1, 1 January 1990 (1990-01-01) , pages 21-28, XP000103609, ISSN: 0885-8993

**Description**

L'invention concerne un procédé et un système de régulation du couple électromagnétique moyen d'une machine électrique tournante polyphasée équipée de bobinages statoriques et/ou rotoriques. L'invention concerne également des supports d'enregistrement et une structure de données pour la mise en oeuvre de ce procédé.

Plus précisément, l'invention concerne un procédé de régulation d'une machine dans laquelle les bobinages statoriques et/ou rotoriques sont alimentés par une tension et un courant polyphasés générés par un onduleur, l'onduleur étant formé d'interrupteurs dont la commutation est commandable, ce procédé comportant :

- une étape de commande de la commutation des interrupteurs en fonction d'une consigne de couple instantané, en mettant en oeuvre à cet effet un processus de commande à réponse pile de manière à ce que la consigne de couple instantané soit atteinte dès le prochain instant de régulation, et
- à chaque instant de régulation, une étape de calcul, à partir d'une consigne de couple moyen, de la consigne de couple instantané à appliquer pour que la moyenne du couple électromagnétique instantané de la machine converge vers ladite consigne de couple moyen.

Dans la suite de la description, on utilisera le terme "moteur" pour désigner une machine électrique tournante polyphasée et le terme "couple" pour désigner le couple électromagnétique d'une telle machine.

Les procédés ci-dessus présentent une très grande dynamique de régulation puisque la consigne de couple instantané peut être modifiée à chaque instant de régulation et elle est atteinte dès le prochain instant de régulation.

Ainsi, de tels procédés de commande sont particulièrement utiles pour des applications où la consigne de couple change brusquement. Par exemple, ces procédés sont utilisés pour commander des moteurs d'entraînement d'un laminoir.

Toutefois, lorsque la consigne de couple instantané est obtenue par simple égalisation en assimilant par exemple la consigne de couple moyen à la consigne de couple instantané, il existe un écart entre la valeur de la consigne de couple moyen et la moyenne du couple instantané entre deux instants de régulation successifs. Dès lors, la consigne de couple moyen n'est soit jamais parfaitement atteinte, soit atteinte en faisant la moyenne du couple instantané sur un grand nombre d'instants de régulation de sorte que le procédé ne présente plus une grande dynamique de régulation.

Le document EP 1 211 798 A2 ou le document EP 1 292 011 A1 divulgue un système de contrôle d'un moteur comprenant une première chaîne de contrôle du fondamental du courant de commande et une seconde chaîne de contrôle d'un harmonique du courant de commande.

L'invention vise à remédier à cet inconvénient en proposant un procédé de régulation du couple électromagnétique moyen présentant une grande dynamique de régulation.

L'invention a donc pour objet un procédé de régulation du couple électromagnétique moyen tel que décrit ci-dessus, caractérisé en ce qu'il comporte une étape de détermination de la valeur des harmoniques du courant et/ou de la tension générés par l'onduleur, et en ce que, lors de l'étape de calcul, la consigne de couple instantané est également établie en fonction de cette valeur des harmoniques de manière à produire une consigne de couple instantané propre à limiter l'écart entre la moyenne du couple électromagnétique instantané entre deux instants de régulation successifs, et ladite consigne de couple moyen.

Il a été constaté que l'écart entre la consigne de couple moyen et la moyenne du couple instantané entre deux instants de régulation successifs est dû au fait que l'onduleur ne peut pas générer des tensions ou des courants parfaitement sinusoïdaux à partir d'une tension continue. En réalité, la tension et le courant générés se décomposent en une composante sinusoïdale à une fréquence fondamentale et en des composantes sinusoïdales de fréquences plus élevées correspondant aux harmoniques de rang supérieur ou égal à deux. Ici, la composante sinusoïdale de fréquence fondamentale est simplement appelée le fondamental tandis que les composantes sinusoïdales de fréquences plus élevées sont appelées harmoniques.

Le fondamental crée un couple constant $\Gamma_m$ sur une période du fondamental. Les harmoniques engendrent un couple pulsatoire parasite de fréquence plus élevée. Le couple instantané $\Gamma_s$ du moteur est le résultat de la superposition du couple $\Gamma_m$ et du couple pulsatoire. Le couple pulsatoire et le couple $\Gamma_m$ sont indépendants l'un de l'autre. Dès lors, les procédés connus qui calculent une consigne de couple instantané uniquement en fonction de la consigne de couple moyen ne tienne pas compte du couple pulsatoire. Ainsi, même si, par exemple, le couple instantané à chaque instant de régulation est rigoureusement identique à la consigne de couple moyen, la moyenne du couple instantané $\Gamma_s$ entre deux instants de régulation successifs n'est pas égale à cette consigne de couple moyen puisque le couple instantané varie entre ces deux instants à cause du couple pulsatoire. Le couple pulsatoire est donc responsable de l'écart entre la consigne de couple moyen et la moyenne du couple instantané. Cet écart est d'autant plus important que l'amplitude du couple pulsatoire est importante. Donc, puisque le couple pulsatoire est créé par les harmoniques de tension et/ou de courant, la valeur de cet écart est fonction de la valeur des harmoniques.

Le procédé ci-dessus corrige le défaut des procédés connus en prenant en compte pour le calcul de la consigne de couple instantané, non seulement la consigne de couple moyen, mais également la valeur des harmoniques de courant et/ou de tension.

Suivant d'autres caractéristiques du procédé conforme à l'invention, celui-ci se caractérise en ce que :

- le processus de commande à réponse pile établit une consigne de commande des interrupteurs par modulation de largeur d'impulsions, et en ce que l'étape de commande comporte également, entre chaque instant de régulation, une opération de commande de la commutation des interrupteurs en mettant en oeuvre un processus de modulation de largeur d'impulsions configuré en fonction de ladite consigne de commande établie par le processus de commande à réponse pile ;
- le processus de modulation de largeur d'impulsions est un processus de modulation de largeur d'impulsions synchrone avec la fréquence du fondamental de la tension générée par l'onduleur, et en ce que les instants de régulation sont espacés les uns des autres par un intervalle temporel égal à T'/2p , où p est le nombre de phases de la machine et T' est la période du fondamental de la tension générée par l'onduleur ;
- le processus de commande à réponse pile est adapté pour qu'aux instants de régulation la phase du fondamental

$$\frac{k\pi}{p},$$

de la tension générée par l'onduleur soit égale à $\frac{k\pi}{p}$, $k$ étant un nombre entier ;
- la valeur des harmoniques est établie, lors de l'étape de détermination, à partir de la valeur de la consigne de commande établie par le processus de commande à réponse pile à l'instant de régulation précédent ;
- le processus de modulation de largeur d'impulsions utilise successivement dans le temps plusieurs modulations différentes de largeur d'impulsions ; la valeur des harmoniques est établie à partir d'au moins un paramètre de calcul, les différentes valeurs du ou de chaque paramètre étant calculées à l'avance et pré-enregistrées pour chaque modulation différente de largeur d'impulsions susceptible d'être utilisée ; et la valeur du ou de chaque paramètre à utiliser lors de l'étape de détermination, est sélectionnée en fonction de la valeur de la consigne de commande établie par le processus de commande à réponse pile à l'instant de régulation précédent ;
- un paramètre de calcul est défini par la relation suivante :

$$\varepsilon(0) = \left( \sum_{n=2}^{\infty} \frac{V_n}{n} \right)_0$$

où :

- $V_n$ est l'amplitude de l'harmonique de tension de rang n ;
- n est un nombre entier correspondant au rang de l'harmonique ;

- la consigne de commande est un vecteur de tension défini, dans un repère orthonormé $\alpha, \beta$ fixe par rapport aux bobinages statoriques, par son module et un angle et en ce que la valeur des harmoniques de courant est établie à partir de la relation suivante :

$$\Delta I_q = -\frac{\varepsilon(0)}{L.\omega}.\cos(\beta_0 - \rho_0)$$

où :

- L est l'inductance statorique de la machine électrique tournante,
- $\omega$ est la vitesse angulaire du rotor de la machine électrique tournante,
- $\beta_0$ est l'angle du vecteur de tension établi (en 96) à l'instant de régulation précédent par le processus de commande à réponse pile,
- $\Delta I_q$ est la valeur des harmoniques de courant le long de l'axe q dans un repère tournant d, q lié au flux rotorique, le flux rotorique étant aligné sur l'axe d, et
- $\rho_0$ est l'angle du repère d,q par rapport au repère fixe $\alpha,\beta$ lié aux bobines statoriques.

- un paramètre de calcul est défini par la relation suivante :

$$\delta(0) = \left( \sum_{n=2}^{\infty} V_n \right)$$

où Vn est l'amplitude de l'harmonique de tension de rang n ;

- l'onduleur est alimenté à partir d'au moins une tension continue d'alimentation limitée en amplitude, et en ce que, lors de l'étape de calcul, la consigne de couple instantané est également établie en fonction de la valeur instantanée de la tension continue disponible à l'instant de régulation, de manière à ce que la consigne de couple instantané corresponde à une tension continue disponible.

- la consigne de couple instantané est établie sous la forme d'une consigne de courant instantané à l'aide des relations suivantes :

$$\left[ \hat{I}_d - \hat{I}_{dc} \right]^2 + \left[ \hat{I}_q - \hat{I}_{qc} \right]^2 \le \frac{\hat{V}_M^2}{Z^2}$$

$$\hat{I}_d^2 + \hat{I}_q^2 \le \hat{I}_M^2$$

où :

- $\hat{V}_M$ est la valeur instantanée de la tension maximale continue disponible pour alimenter l'onduleur,
- $\hat{I}_M$ est la valeur instantanée du courant maximal pouvant être généré par l'onduleur 8,
- $\hat{I}_q$ et $\hat{I}_d$ sont les composantes de la consigne du vecteur de courant instantané le long respectivement des axes q et d du repère d, q
- Z est défini par la relation suivante :

$$Z = \sqrt{R^2 + L^2 \cdot \omega^2}$$ , où R est la résistance statorique de la machine, L est l'inductance statorique de la machine, et $\omega$ est la vitesse angulaire du rotor de la machine,

- $\hat{I}_{dc}$ et $\hat{I}_{qc}$ sont définis par les relations suivantes :

$$\hat{I}_{dc} = -\frac{L.\omega}{Z^2} \left\{ R.(\Delta I_q - \Delta J_q) - L.\omega.(\Delta I_d - \Delta J_d) + \omega.\Phi_a \right\}$$

$$\hat{I}_{qc} = -\frac{1}{Z^2} \left\{ R.\omega.\phi_a - R.L.\omega.(\Delta I_d - \Delta J_d) - L^2 \cdot \omega^2 \cdot (\Delta I_q - \Delta J_q) \right\}$$

où :

- $\Delta I_d$ et $\Delta I_q$ sont les composantes du vecteur de courant harmonique généré par l'onduleur, le long respectivement des axes d et q du repère d,q, et $\Delta J_q$ et $\Delta J_d$ sont des composantes proportionnelles au vecteur de tension harmonique généré par l'onduleur, respectivement le long des axes q et d du repère d, q, les composantes $\Delta I_d$, $\Delta J_q$ et $\Delta J_d$ étant définies par les relations suivantes :

$$\Delta I_d = +\frac{\varepsilon(0)}{L.\omega}.\sin(\beta_0 - \rho_0)$$

$$\Delta J_d = \frac{\delta(0)}{L.\omega}.\sin(\beta_0 - \rho_0)$$

$$\Delta J_q = -\frac{\delta(0)}{L.\omega}.\cos\left(\beta_0 - \rho_0\right)$$

L'invention a également pour objet un support d'enregistrement d'informations, caractérisé en ce qu'il comporte des instructions pour l'exécution d'un procédé de régulation conforme à l'invention, lorsque ces instructions sont exécutées par un calculateur électronique.

L'invention a également pour objet une structure de données, caractérisée en ce que cette structure de données associe à chaque valeur particulière d'une consigne de commande établie par le processus de commande à réponse pile, plusieurs angles et la valeur d'au moins un paramètre de régulation, l'ensemble des angles associés avec une même valeur de ladite consigne de commande, définissant une modulation particulière de largeur d'impulsions synchrone avec la fréquence du fondamental de la tension générée par l'onduleur, et la valeur dudit au moins un paramètre de régulation étant fonction de la valeur des harmoniques de courant et/ou de tension générés par l'onduleur commandé à l'aide de la modulation de largeur d'impulsions définie par les angles associés à la même valeur de la consigne de commande.

L'invention a également pour objet un système de régulation du couple électromagnétique moyen d'une machine électrique tournante polyphasée équipée de bobinages statoriques et/ou rotoriques alimentés par une tension et un courant polyphasés générés par un onduleur, l'onduleur étant formé d'interrupteurs dont la commutation est commandable, ce système comportant :

- une unité de commande de la commutation des interrupteurs en fonction d'une consigne de couple instantané, cette unité de commande étant apte à mettre en oeuvre à cet effet un processus de commande à réponse pile de manière à ce que la consigne de couple instantané soit atteinte dès le prochain instant de régulation ;
- une unité de calcul, à partir d'une consigne de couple moyen, de la consigne de couple instantané à appliquer pour que la moyenne du couple électromagnétique instantané de la machine converge vers ladite consigne de couple moyen ;

caractérisé en ce qu'il comporte une unité de détermination de la valeur des harmoniques du courant et/ou de la tension générés par l'onduleur, et en ce que l'unité de calcul calcule la consigne de couple instantané également en fonction de cette valeur des harmoniques de manière à produire une consigne de couple instantané propre à limiter l'écart entre la moyenne du couple électromagnétique instantané entre deux instants de régulation successifs, et ladite consigne de couple moyen.

L'invention sera mieux comprise à la lecture de la description qui va suivre, donnée uniquement à titre d'exemple et faite en se référant aux dessins sur lesquels :

- la figure 1 est une illustration schématique d'un système de régulation conforme à l'invention,
- la figure 2 est un graphique représentant l'évolution au cours du temps d'un signal de commande généré par le système de la figure 1,
- la figure 3 est un organigramme d'un procédé de régulation conforme à l'invention, et
- la figure 4 est un graphique représentant l'évolution du couple instantané au cours du temps dans le cas du procédé de régulation de la figure 3.

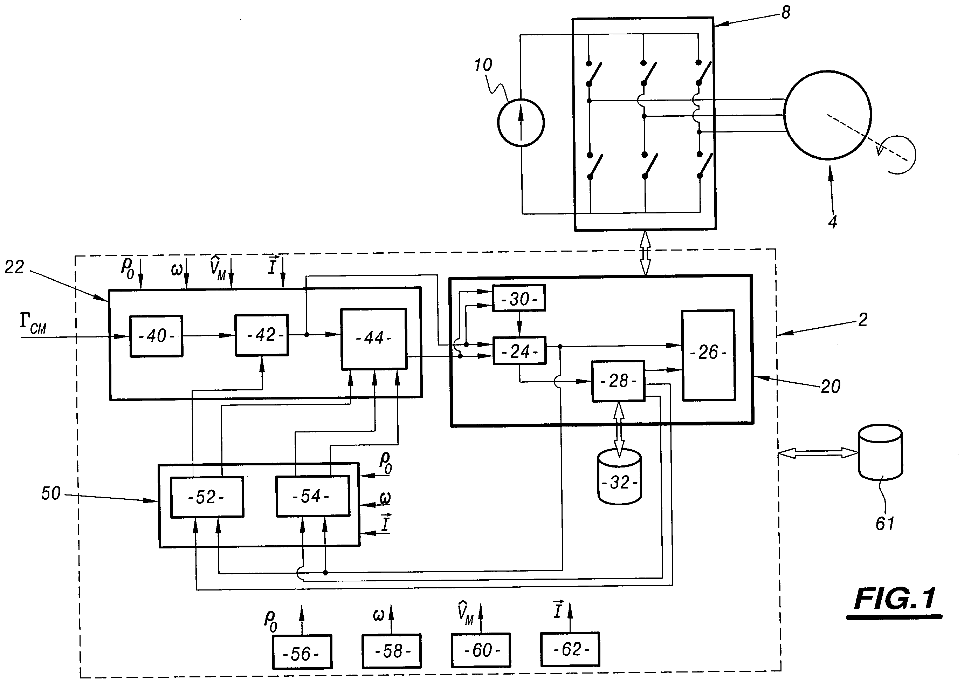

La figure 1 représente un système 2 de régulation du couple électromagnétique moyen d'un moteur 4 équipé d'un stator et d'un rotor.

La suite de la description sera faite dans le cas particulier où ce moteur 4 est un moteur triphasé synchrone à pôles lisses à aimants permanents montés en surface du rotor. Le stator est équipé de bobinages statoriques.

En particulier, les relations mathématiques données dans la suite de cette description sont celles établies à partir des équations d'état d'un tel moteur.

Le système 2 est apte à recevoir en entrée une consigne de couple moyen $\Gamma_{cm}$ et à délivrer en sortie des signaux de commande d'un onduleur triphasé conventionnel 8. Cet onduleur 8 est alimenté par une source 10 de tension continue.

De façon classique, cet onduleur 8 comporte trois bras ou "leg" en anglais, formés chacun de deux interrupteurs raccordés en série par l'intermédiaire d'un point milieu. Le point milieu de chaque bras est raccordé aux bobinages statoriques du moteur 4 de manière à alimenter en tension et en courant chaque phase de ce moteur.

Le système 2 comporte une unité de commande 20 de l'onduleur 8 en fonction d'une consigne de couple instantané et une unité de calcul 22 de cette consigne de couple instantané en fonction de la consigne $\Gamma_{cm}$

L'unité de commande 20 comporte un module 24 de commande à réponse pile et un module 26 de commande de la commutation des interrupteurs de l'onduleur 8 par modulation de largeur d'impulsions.

Le module 24 reçoit en entrée la consigne de couple instantané sous la forme d'un vecteur de courant instantané $(\hat{I}_d, \hat{I}_q)$ et délivre en sortie un vecteur de tension $\vec{V}$.

Le vecteur de courant instantané $(\hat{I}_d, \hat{I}_q)$ est défini dans un repère orthonormé tournant d, q lié au flux du rotor du moteur 4 et dont l'axe d est aligné sur le flux rotorique du moteur et dont l'axe q se déduit de l'axe d par une rotation de $\dfrac{\pi}{2}$ dans le sens trigonométrique direct. Le vecteur de tension $\vec{V}$ est défini, dans un repère orthonormé fixe α, β lié au stator du moteur 4, par son module $\|\vec{V}\|$ et un angle $\beta_0$ par rapport à l'axe α. Les repères d, q et α, β sont classiques dans ce domaine technique et la transformation des coordonnées exprimées dans un repère en celles exprimées dans l'autre repère se fait par rotation des axes de référence.

Plus précisément, le module 24 délivre en sortie l'angle $\beta_0$ et la moyenne du module du vecteur de tension $\vec{V}$ entre deux instants de régulation.

L'angle $\beta_0$ est transmis directement à une entrée du module 26 de commande tandis que le module $\|\vec{V}\|$ est transmis à un module 28 de sélection du type de modulation de largeur d'impulsions.

Le module 24 est apte à calculer la valeur du vecteur de tension $\vec{V}$ pour qu'au prochain instant de régulation, la consigne de couple instantané correspondant à la consigne $(\hat{I}_d, \hat{I}_q)$ soit atteinte. A cet effet, le module 24 met en oeuvre un processus de commande à réponse pile également connu sous les termes anglais de "deadbeat control". Par exemple, ici, le processus mis en oeuvre est décrit dans la demande de brevet EP-A- 123 35 06. On se contentera donc de rappeler que la relation utilisée pour calculer la valeur du vecteur de tension $\vec{V}$ en fonction de la consigne $(\hat{I}_d, \hat{I}_q)$ d'entrée est la suivante :

$$V_{dq} = \begin{vmatrix} V_d \\ V_q \end{vmatrix} = \frac{1}{a(T)} \cdot \begin{vmatrix} \hat{I}_d - I_d^0(T) \\ \hat{I}_q - I_q^0(T) \end{vmatrix} \qquad (1)$$

dans laquelle :

$$a(T) = \frac{1}{R} \cdot \left( 1 - e^{-\frac{T}{\tau}} \right)$$

et :

$$\begin{vmatrix} I_d^0(T) \\ I_q^0(T) \end{vmatrix}$$

est l'évolution naturelle des courants instantanés du stator du moteur en court-circuit après un intervalle de régulation T à partir de l'état initial du courant statorique à l'instant de mesure et de régulation précédent des courants.

T est l'intervalle de temps entre l'instant de régulation courant et le prochain instant de régulation, R est la résistance statorique du moteur, L est l'inductance statorique du moteur et $\tau$ est la constante de temps statorique $\left( \tau = \dfrac{L}{R} \right)$.

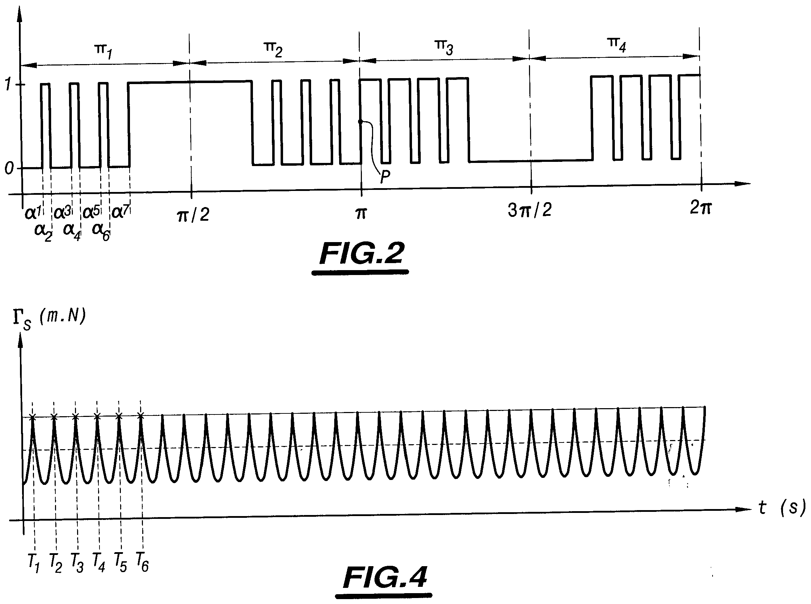

Le module 26 est propre à commander la commutation des interrupteurs de l'onduleur 8 en fonction de la valeur de l'angle $\beta_0$ calculé par le module 24 et de la valeur d'angles $\alpha_i$ sélectionnés par le module 28. A cet effet, le module 26 met en oeuvre un processus conventionnel de modulation de largeur d'impulsions synchrone avec la fréquence du fondamental de la tension générée par l'onduleur 8. Un exemple de signal de commande généré par ce module 26 est représenté sur la figure 2.

La figure 2 représente l'évolution du signal de commande d'un interrupteur supérieur d'un bras de l'onduleur 8 au cours du temps. Ici, par exemple, la valeur 0 du signal indique que l'ouverture de l'interrupteur est commandée tandis que la valeur 1 indique que la fermeture de l'interrupteur est commandée. La figure 2 représente les instants de régulation en fonction de la phase du fondamental de tension généré par l'onduleur 8. L'intervalle $[0,2\pi]$ est divisé en quatre sous-intervalles égaux $\pi_1$, $\pi_2$, $\pi_3$ et $\pi_4$. Dans l'intervalle $\pi_1$, les instants de commutation de l'interrupteur sont définis par des angles $\alpha_i$. Ici, sept angles $\alpha_i$ sont nécessaires pour définir les commutations de l'interrupteur pendant l'intervalle $\pi_1$ et la modulation de largeur d'impulsions représentée ici est donc dite "sept angles". Les instants de commutation dans les intervalles $\pi_2$ à $\pi_4$ se déduisent de ceux définis pour l'intervalle $\pi_1$ par des transformations classiques. Les signaux de commande des autres interrupteurs se déduisent de celui de la figure 2 en décalant de $\dfrac{2\pi}{p}$ le signal de la figure 2, où p est le nombre de phases du moteur 4.

De manière à éliminer les harmoniques de rang pair et les harmoniques de rang multiple de trois, le signal de commande présente ici deux axes de symétrie aux abscisses $\dfrac{\pi}{2}$ et $\dfrac{3\pi}{2}$, et un point de symétrie P à l'abscisse $\pi$.

Ainsi, un type de modulation est défini une fois que la valeur des angles $\alpha_i$ est connue. La valeur des angles $\alpha_i$ fixe le module du fondamental de la tension générée par l'onduleur.

Le module 28 est apte à sélectionner la valeur des angles $\alpha_i$ correspondants aux modules de tension $\|\vec{V}\|$. A cet effet, le module 28 est associé à une mémoire 32 contenant un tableau TP de la forme suivante :

| $\left\|\overrightarrow{\vec{V}}\right\|_1$ | $\varepsilon(0)_l$ | $\delta(0)_l$ | $\alpha_{1l}$ | $\alpha_{2l}$ | $\alpha_{3l}$ | $\alpha_{4l}$ | $\alpha_{5l}$ | $\alpha_{6l}$ | $\alpha_{7l}$ |
|---|---|---|---|---|---|---|---|---|---|
| : | : | : | : | : | : | : | : | : | : |
| $\left\|\overrightarrow{\vec{V}}\right\|_k$ | $\varepsilon(0)_k$ | $\delta(0)_k$ | $\alpha_{1k}$ | $\alpha_{2k}$ | $\alpha_{3k}$ | $\alpha_{4k}$ | $\alpha_{5k}$ | $\alpha_{6k}$ | $\alpha_{7k}$ |
| : | : | : | : | : | : | : | : | : | : |
| $\left\|\overrightarrow{\vec{V}}\right\|_m$ | $\varepsilon(0)_m$ | $\delta(0)_m$ | $\alpha_{1m}$ | $\alpha_{2m}$ | $\alpha_{3m}$ | $\alpha_{4m}$ | $\alpha_{5m}$ | $\alpha_{6m}$ | $\alpha_{7m}$ |

Ce tableau est propre à associer à chaque valeur normalisée $\|\vec{V}\|_j$ du module de tension $\|\vec{V}\|$, la valeur des angles $\alpha_{ik}$ permettant à l'onduleur 8 de générer une tension dont le module du fondamental est égal au module $\|\vec{V}\|$. La relation permettant de passer de la valeur normalisée du module $\|\vec{V}\|$ à la valeur produite par le module 24 est la suivante :

$$\|\vec{V}\| = \left\|\overrightarrow{\vec{V}}\right\| \cdot \hat{V}_M$$

où :

- $\hat{V}_M$ est la valeur instantanée de la tension aux bornes de la source 10.

De plus, ce tableau associe également à chaque valeur normalisée du module $\|\vec{V}\|$, la valeur de deux paramètres $\varepsilon(0)$ et $\delta(0)$. Le calcul de la valeur de ces paramètres ainsi que leur intérêt apparaîtra à la lecture de la suite de la description. Le module 28 est donc également apte à sélectionner et à délivrer en sortie la valeur des paramètres $\varepsilon(0)$ et $\delta(0)$ correspondant à la valeur du module $\|\vec{V}\|$.

Si la valeur normalisée $\|\vec{V}\|$ se situe entre deux valeurs préenregistrées dans le tableau TP, le module de sélection 28 est apte à calculer par interpolation linéaire les valeurs correspondantes des paramètres $\varepsilon(0)$ et $\delta(0)$ et des angles $\alpha_i$.

L'unité de commande 20 comporte également un module 30 de détermination des instants de régulation. Ce module 30 est apte à déterminer l'intervalle T entre deux instants de régulation successifs pour que celui-ci soit égale à $\dfrac{T'}{2p}$, où T' est la période du fondamental de la tension générée par l'onduleur 8 et p le nombre de phases du moteur 4. En effet, il a été constaté que ce choix de la valeur de l'intervalle T élimine certains rangs d'harmoniques de tension générés par l'onduleur 8. De plus, ici, pour simplifier certaines des relations décrites ci-dessous, ces instants de régulation sont déterminés pour correspondre à des instants où la phase du vecteur de tension $\vec{V}$ est un multiple entier de $\dfrac{\pi}{p}$. A cet effet, par exemple, le module 30 est apte à résoudre par itérations successives la relation suivante de manière à déterminer la valeur de l'intervalle de temps T :

$$\sin\left[k\cdot\frac{\pi}{3}-\left(\rho_0+\omega\cdot T+\varphi_D\right)\right]=e^{-\frac{T}{\tau}}\cdot\frac{\left\|\vec{I}_{dq}^{D}(0)\right\|}{\left\|\vec{I}_{dq}^{D}(T)\right\|}\cdot\sin\left(k\cdot\frac{\pi}{3}-\left(\rho_0+\varphi_0\right)\right) \quad (2)$$

où :

- les angles $\varphi_D$ et $\varphi_0$ sont définis par les relations suivantes :

$$\cos(\varphi_D)=\frac{I_d^{D}(T)}{\left\|\vec{I}_{dq}^{D}(T)\right\|}\quad \cos(\varphi_0)=\frac{I_d^{D}(0)}{\left\|\vec{I}_{dq}^{D}(0)\right\|} \tag{3}$$

$$\sin(\varphi_D)=\frac{I_q^{D}(T)}{\left\|\vec{I}_{dq}^{D}(T)\right\|}\quad \sin(\varphi_0)=\frac{I_q^{D}(0)}{\left\|\vec{I}_{dq}^{D}(0)\right\|}$$

- $I_d^{D}(T),\ I_q^{D}(T),\ I_d^{D}(0)$ et $I_q^{D}(0)$ sont définis par les relations suivantes :

$$\vec{I}_{dq}^{D}(T)=\left|\begin{array}{c}I_d^{D}(T)\\ I_q^{D}(T)\end{array}\right|=\left|\begin{array}{c}\hat{I}_d+\dfrac{X^2}{L\cdot Z^2}\cdot\Phi_a\\ \hat{I}_q+\dfrac{R\cdot X}{L\cdot Z^2}\cdot\Phi_a\end{array}\right|\quad \vec{I}_{dq}^{D}(0)=\left|\begin{array}{c}I_d^{D}(0)\\ I_q^{D}(0)\end{array}\right|=\left|\begin{array}{c}\hat{I}_d(0)+\dfrac{X^2}{L\cdot Z^2}\cdot\Phi_a\\ \hat{I}_q(0)+\dfrac{R\cdot X}{L\cdot Z^2}\cdot\Phi_a\end{array}\right| \quad (4)$$

Où:

- $\Phi_a$ est le flux rotorique des aimants,
- L est l'inductance statorique du moteur,
- X est défini par la relation X = L. $\omega,$ où $\omega$ est la vitesse angulaire du rotor,
- Z est défini par la relation suivante $Z^2=R^2+L^2\cdot\varpi^2$
- $\hat{I}_d(0)$ et $\hat{I}_q(0)$ sont les composantes dans le repère d,q du vecteur de courant instantané mesuré à l'instant de régulation courant,
- $\hat{I}_d$ et $\hat{I}_q$ est la consigne de courant reçue à l'entrée du module 24.

La relation (2) est obtenue en résolvant le système d'équations (1) auquel est adjointe une équation supplémentaire pour exprimer la contrainte selon laquelle la phase du vecteur de tension doit être égale à $\dfrac{k\pi}{p},$ où k est un entier compris entre [1,...,6] et p est le nombre de phases du moteur 4. En triphasé, cette équation supplémentaire est par exemple la suivante :

$$V_\alpha\cdot\sin\left(k\cdot\frac{\pi}{3}\right)-V_\beta\cdot\cos\left(k\cdot\frac{\pi}{3}\right)=0 \quad (4)$$

où $V_\alpha$, $V_\beta$ sont les composantes du vecteur de tension dans le repère $\alpha$, $\beta$.

Plus de détails sur la détermination de l'intervalle de temps T pourront être trouvés dans la demande de brevet française déposée en France le même jour par la demanderesse sous le titre de "Procédé de régulation du couple électromagnétique instantané d'une machine électrique tournante polyphasée".

L'unité de calcul 22 convertit la consigne de couple moyen $\Gamma_{cm}$ en une consigne de couple instantané exprimée sous la forme de la consigne de vecteur de courant instantané $(\hat{I}_d, \hat{I}_q)$. A cet effet, elle comporte un module 40 de calcul d'une consigne de courant fondamental $\tilde{I}_q$ un module 42 de correction de cette consigne de courant fondamental et un module 44 d'établissement de la consigne $(\hat{I}_d, \hat{I}_q)$ en tenant compte des limites de fonctionnement de l'onduleur 8.

Le module 40 établit la consigne de courant fondamental $\tilde{I}_q$ à partir de la consigne $\Gamma_{cm}$ à l'aide de la relation suivante :

$$\tilde{I}_q = \frac{\Gamma_{cm}}{N_p \cdot \Phi_a}$$

où :

- $N_p$ est le nombre de paires de pôles du moteur,
- $\Phi_a$ est le flux rotorique des aimants.

Ces deux paramètres $N_p$ et $\Phi_a$ sont des paramètres connus fonctions des caractéristiques du moteur 4.

Le module 42 est propre à corriger la consigne $\tilde{I}_q$ en fonction de la valeur des harmoniques du courant généré par l'onduleur 8, à l'aide de la relation suivante :

$$\hat{I}_q = \tilde{I}_q + \Delta I_q \tag{5}$$

où :

- $\hat{I}_q$ est la composante le long de l'axe q, dans le repère d, q, de la consigne $(\hat{I}_d, \hat{I}_q)$, et
- $\Delta I_q$ est la composante du vecteur de courant harmonique le long de l'axe q du repère d, q.

Le vecteur de courant harmonique est celui correspondant uniquement aux harmoniques du courant généré par l'onduleur 8 sans prendre en compte le fondamental.

Le module 44 est apte à établir la consigne $(\hat{I}_d, \hat{I}_q)$ destinée au module 24 qui respecte les limites en tension et en courant de l'onduleur 8. A cet effet, le module 44 est propre à résoudre le système d'inéquations suivant :

$$\left[\hat{I}_d - \hat{I}_{dc}\right]^2 + \left[\hat{I}_q - \hat{I}_{qc}\right]^2 \leq \frac{\hat{V}_M^2}{Z^2} \tag{6}$$

$$\hat{I}_d^2 + \hat{I}_q^2 \leq \hat{I}_M^2 \tag{7}$$

où :

- $\hat{V}_M$ est la valeur instantanée de la tension maximale continue disponible aux bornes de la source 10,
- $\hat{I}_M$ est la valeur instantanée du courant maximal pouvant être généré par l'onduleur 8,
- $\hat{I}_d$ est la composante du vecteur de courant instantané le long de l'axe d du repère d, q

Z est défini par la relation suivante :

$$Z = \sqrt{R^2 + L^2 \cdot \omega^2}$$

où R est la résistance statorique, L, l'inductance statorique et $\omega$ la vitesse angulaire.

$\hat{I}_{dc}$ et $\hat{I}_{qc}$ sont définis par les relations suivantes :

$$\hat{I}_{dc} = -\frac{L.\omega}{Z^2} \cdot \left\{ R.(\Delta I_q - \Delta J_q) - L.\omega.(\Delta I_d - \Delta J_d) + \omega.\Phi_a \right\} \qquad (8)$$

$$\hat{I}_{qc} = -\frac{1}{Z^2} \cdot \left\{ R.\omega.\phi_a - R.L.\omega.(\Delta I_d - \Delta J_d) - L^2.\omega^2.(\Delta I_q - \Delta J_q) \right\} \qquad (9)$$

où :

- $\Delta I_d$ est la composante du vecteur de courant harmonique selon l'axe d du repère d,q, et
- $\Delta J_q$ et $\Delta J_d$ sont des composantes proportionnelles aux vecteurs de tension harmonique respectivement le long des axes d et q du repère d, q.

Ici, la tension maximale instantanée $\hat{V}_M$ et la vitesse angulaire $\omega$ sont mesurées. L'intensité maximale instantanée $\hat{I}_M$ est constante et connue à partir des caractéristiques électriques de l'onduleur 8. Le calcul de la valeur des composantes $\Delta I_d$, $\Delta J_q$ et $\Delta J_d$ est défini ci-dessous.

Le système 2 comporte également une unité 50 de détermination des vecteurs de tension et de courant harmoniques selon les axes d et q du repère d, q. A cet effet, l'unité 50 comporte un premier module 52 de détermination du vecteur de courant harmonique et un second module 54 de détermination du vecteur de tension harmonique. Plus précisément, le module 52 est apte à délivrer la valeur des composantes $\Delta I_q$ et $\Delta I_d$ aux modules 42 et 44 et le module 54 est apte à délivrer la valeur des composantes $\Delta J_q$ et $\Delta J_d$ au module 44.

A cet effet, le module 52 établit la valeur des composantes $\Delta I_q$ et $\Delta I_d$ à l'aide des relations suivantes :

$$\Delta I_d = \frac{\varepsilon(0)}{L.\omega} \cdot \sin(\beta_0 - \rho_0) \qquad (10)$$

$$\Delta I_q = -\frac{\varepsilon(0)}{L.\omega} \cdot \cos(\beta_0 - \rho_0) \qquad (11)$$

où :

- $\rho_0$ est l'angle du repère d, q par rapport au repère $\alpha$, $\beta$ fixe au stator, et
- $\beta_0$ est l'angle du vecteur $\vec{V}$.

Le module 54 établit les composantes $\Delta J_q$ et $\Delta J_d$ à l'aide des formules suivantes :

$$\Delta J_d = \frac{\delta(0)}{L.\omega} \cdot \sin(\beta_0 - \rho_0) \qquad (12)$$

$$\Delta J_q = -\frac{\delta(0)}{L.\omega} \cdot \cos(\beta_0 - \rho_0) \qquad (13)$$

Les modules 52 et 54 sont également raccordés aux sorties du module 24 et du module 28, de manière à obtenir la valeur de l'angle $\beta_0$ et la valeur des paramètres $\delta(0)$ et $\varepsilon(0)$.

$\Delta J_q$ et $\Delta J_d$ sont reliés aux valeurs des harmoniques de tension par les relations suivantes

$$\begin{cases} \Delta V_d = L\omega\,\Delta J_d \\ \Delta V_q = L\omega\,\Delta J_q \end{cases}$$

Où:

- et $\Delta V_q$ et $\Delta V_d$ sont les composantes du vecteur de tension harmonique respectivement le long des axes q et d du repère d, q.

Toutefois, seules les composantes $\Delta J_d$ et $\Delta J_q$ sont utilisées ici.

Finalement, le système 2 comporte un capteur 56 de la position angulaire $\rho_0$ du rotor du moteur 4, un capteur 58 de la vitesse angulaire $\omega$ du rotor du moteur 4, un capteur 60 de la tension continue instantanée $\hat{V}_M$ délivrée par la source 10 à l'onduleur 8, et un capteur 62 du courant instantané dans les bobinages statoriques.

Le capteur 62 est formé par plusieurs capteurs de courant élémentaire propres chacun à mesurer le courant dans les bobinages statoriques d'une phase du moteur 4, de manière à mesurer le vecteur de courant instantané. Ce capteur 62 est de plus propre à transformer le vecteur de courant instantané mesuré par la transformation de Concordia généralisée à un système polyphasé, de manière à délivrer en sortie directement les deux composantes du vecteur de courant instantané $\hat{I}_d(0)$ et $\hat{I}_q(0)$.

Ces capteurs sont connectés aux différents modules qui nécessitent une mesure de ces valeurs. En particulier, le capteur 56 délivre la valeur de l'angle $\rho_0$ aux modules 52 et 54. Les connexions entre les capteurs 56 à 62 et les différents modules du système 2 n'ont pas toutes été représentées pour simplifier l'illustration.

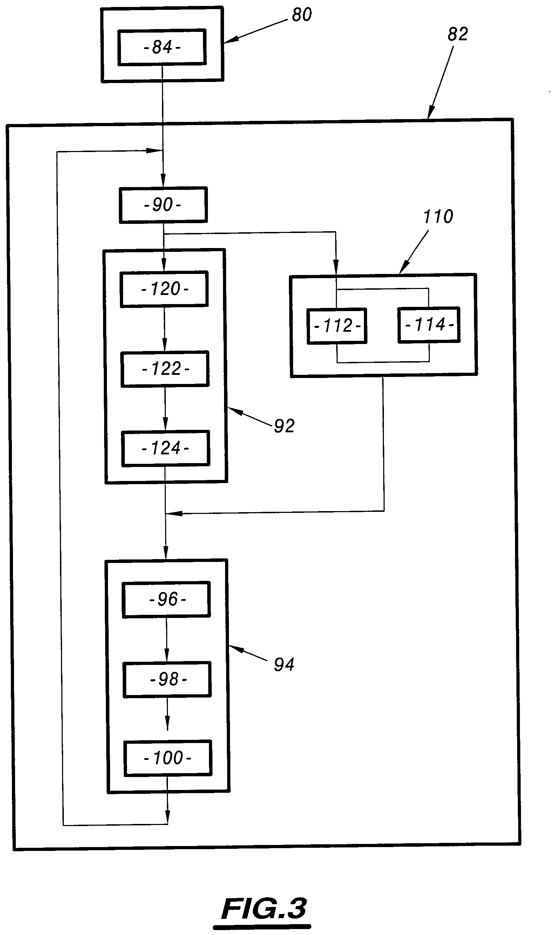

Le système 2 est typiquement réalisé à l'aide de calculateurs électroniques conventionnels programmables. A cet effet, le système 2 est associé à une mémoire 61 contenant des instructions pour l'exécution du procédé de la figure 3, lorsque celles-ci sont exécutées par le système 2.

Le fonctionnement du système 2 va maintenant être décrit en regard du procédé de la figure 3.

Le procédé de la figure 3 se décompose en deux phases principales, une phase 80 d'initialisation des différents paramètres constants utilisés par les modules du système 2, et une phase 82 de régulation du couple du moteur 4.

Lors de la phase 80, la valeur des paramètres $N_p$, $\Phi_a$, $\hat{I}_M$, R, L et Z est déterminée à partir des caractéristiques électriques et mécaniques du moteur et de l'onduleur 8. Une fois déterminées, la valeur de ces paramètres est, par exemple, enregistrée dans la mémoire 61.

Lors de la phase 80, la valeur des paramètres $\varepsilon(0)$ et $\delta(0)$ pour chaque valeur du module $\|\vec{V}\|$, est déterminée à l'aide des relations suivantes :

$$\varepsilon(0) = \left( \sum_{n=2}^{\infty} \frac{V_n}{n} \right)_0 \tag{14}$$

$$\delta(0) = \left( \sum_{n=2}^{\infty} V_n \right) \tag{15}$$

où :

- $V_n$ est l'amplitude de l'harmonique de rang n, et
- n est un nombre entier correspondant au rang de l'harmonique.

L'amplitude des harmoniques varie en fonction du type de modulation, c'est-à-dire en fonction de la valeur des angles $\alpha_i$ et de la valeur instantanée de la tension continue.

Les relations ont été établies dans le cas où les instants de régulation sont choisis pour correspondre exactement à des instants où la phase du fondamental de la tension générée par l'onduleur est égale à $\dfrac{k\pi}{p}$, k étant un nombre entier. En effet, il a été constaté qu'à ces instants précis de régulation, les relations (14) et (15) sont plus simples à exprimer et donc à calculer. En particulier, la valeur des paramètres $\varepsilon(0)$ et $\delta(0)$ est indépendante du temps à ces instants là.

Ici, à titre d'exemple, la valeur de ces paramètres $\varepsilon(0)$ et $\delta(0)$ est calculée par simulation d'un modèle numérique du moteur 4 et de l'onduleur 8. Plus précisément, lors d'une opération 84, l'alimentation du moteur 4 à l'aide de la modulation de largeur d'impulsions définie par les angles $\alpha_{i1}$ enregistrés dans la mémoire 32, est simulée. La tension triphasée générée par le modèle est alors analysée et la valeur de l'amplitude, par exemple, des 2000 premiers harmoniques de tension de rang supérieure à deux est mesuré. A l'aide de ces 2000 valeurs et des relations (14) et (15) précédentes, la valeur des paramètres $\varepsilon(0)$ et $\delta(0)$ est calculée pour la modulation de largeur d'impulsions définie par les angles $\alpha_{i1}$. A la fin de l'opération 84, une valeur normalisée des paramètres $\delta(0)$ et $\varepsilon(0)$ ainsi calculée est enregistrée dans le tableau TP de la mémoire 32 sur la ligne correspondant aux angles $\alpha_{i1}$. La valeur normalisée de $\varepsilon(0)$ et $\delta(0)$ est obtenue en les divisant par la valeur $\hat{V}_M$.

Ensuite, l'opération 84 est réitérée pour chaque type de modulation définie dans le tableau TP de la mémoire 32. Ainsi, à la fin de la phase 80, la valeur des paramètres $\varepsilon(0)$ et $\delta(0)$ définie pour chaque type de modulation, est enregistrée dans la mémoire 32.

Une fois que la valeur de l'ensemble des paramètres nécessaires à l'exécution du système 2 a été enregistrée, la phase 82 de régulation peut commencer.

Lors de la phase de régulation, le système 2 reçoit, lors d'une opération 90 la valeur de la consigne $\Gamma_{cm}$. Cette consigne $\Gamma_{cm}$ est, par exemple, délivrée par un opérateur ou par un dispositif d'asservissement non représenté. La valeur de cette consigne $\Gamma_{cm}$ varie en général lentement par rapport à la fréquence à laquelle une nouvelle consigne de courant instantané $(\hat{I}_d,\hat{I}_q)$ est délivrée au module 24.

A chaque instant de régulation, l'unité 22 calcule, lors d'une étape 92, une nouvelle consigne de courant instantané $(\hat{I}_d,\hat{I}_q)$. Cette nouvelle consigne $(\hat{I}_d,\hat{I}_q)$ est appliquée à l'entrée de l'unité de commande 20.

De l'instant de régulation courant jusqu'au prochain instant de régulation, l'unité 20 commande, lors d'une étape 94, l'onduleur 8 en fonction de cette consigne de courant instantané. La consigne de courant instantané reste constante entre deux instants de régulation.

Plus précisément, le module 24 établit, lors d'une opération 96, à l'instant de régulation courant, la valeur de l'angle $\beta_0$ et du module $\|\vec{V}\|$ qui permet d'obtenir, dès le prochain instant de régulation, le couple instantané correspondant à la consigne de courant instantané $(\hat{I}_d,\hat{I}_q)$.

L'angle $\beta_0$ du vecteur de tension $\vec{V}$ établi par le module 24 est transmis directement au module 26, tandis que le module $\|\vec{V}\|$ de ce même vecteur est transmis au module 28 de sélection.

Le module 28 sélectionne, lors d'une opération 98, la valeur des angles $\alpha_i$ et la valeur des paramètres $\varepsilon(0)$ et $\delta(0)$ correspondant à la valeur du module $\|\vec{V}\|$. La valeur enregistrée des paramètres $\varepsilon(0)$ et $\delta(0)$ est multipliée par la valeur $\hat{V}_M$ mesurée à cet instant.

La valeur sélectionnée des angles $\alpha_i$ est transmise au module 26 tandis que la valeur non normalisée des paramètres $\varepsilon(0)$ et $\delta(0)$ est transmise respectivement aux modules 52 et 54.

A l'aide de l'angle $\beta_0$ et des valeurs des angles $\alpha_i$, le module 26 commande, lors d'une opération 100, la commutation des interrupteurs de l'onduleur 8 en mettant en oeuvre un processus de modulation de largeur d'impulsion synchrone.

Sous la commande du module 26, l'onduleur 8 génère une tension et un courant correspondant au module $\|\vec{V}\|$ et à l'angle $\beta_0$. Par construction de ce module $\|\vec{V}\|$ et de l'angle $\beta_0$, le couple instantané du moteur atteint exactement au prochain instant de régulation la consigne de couple instantané correspondant à la consigne d'entrée $(\hat{I}_d,\hat{I}_q)$. C'est ce qui est représenté sur le graphique de la figure 4. Sur ce graphique, les six premiers instants de régulation $T_1$ à $T_6$ ont été représentés. La ligne en trait fin horizontale représente la consigne de couple instantané correspondant à la consigne $(\hat{I}_d,\hat{I}_q)$. La ligne en trait gras représente l'évolution au cours du temps du couple instantané $\Gamma_s$. On remarque qu'à chaque instant de régulation, grâce à l'opération 96, le couple instantané est égal à la consigne de couple instantané. On remarque également que la moyenne du couple instantané, représentée par une ligne horizontale en pointillés, entre deux instants de régulation est, par exemple, sur ce graphique, inférieure à la valeur de la consigne de couple instantané correspondant à la consigne $(\hat{I}_d,\hat{I}_q)$. Ceci permet de comprendre que si, comme dans les procédés connus, la consigne d'entrée du module 24 est uniquement établie à partir de la consigne de couple moyen $\Gamma_{cm}$, l'écart entre la moyenne du couple instantané entre deux instants de régulation et la consigne de couple moyen puisque cette écart n'est pas uniquement fonction de la consigne de couple moyen.

Pour résoudre ce problème, le procédé de la figure 2 comporte une étape 110 de détermination de la valeur des harmoniques de courant et de tension et l'étape 92 comporte des opérations spécifiques de calcul qui vont maintenant être décrites.

Lors de l'étape 110, à chaque instant de régulation, le module 52 détermine, lors d'une opération 112, la valeur des composantes $\Delta I_q$ et $\Delta I_d$ à partir :

- de la valeur de l'angle $\beta_0$ délivré par le module 24,
- de la valeur du paramètre $\varepsilon(0)$ délivré par le module 28,
- de la valeur de l'angle $\rho_0$ mesurée par le capteur 56, et
- de la valeur de la vitesse angulaire $\omega$ mesurée par le capteur 58.

Les valeurs déterminées lors de cette opération 112 sont alors transmises aux modules 42 et 44 de l'unité de calcul 22.

Simultanément à l'opération 112, le module 54 détermine, lors d'une opération 114, la valeur des composantes $\Delta J_q$ et $\Delta J_d$. Les valeurs de $\Delta J_q$ et $\Delta J_d$ sont transmises au module 44.

Pour obtenir à partir de la consigne de couple moyen $\Gamma_{cm}$ une consigne de couple instantané permettant d'atteindre, en quelques instants de régulation, la consigne de couple moyen $\Gamma_{cm}$, l'étape 92 comporte les opérations suivantes :

- une opération 120 de calcul de la consigne $\tilde{I}_q$ par le module 40, et

- une opération 122 de correction de cette consigne $\tilde{I}_q$ pour obtenir la composante $\hat{I}_q$ de la consigne de courant instantané permettant de faire converger la moyenne du couple instantané entre deux instants de régulation vers la consigne $\Gamma_{cm}$.

De manière à tenir compte des limites de tension instantanée $\hat{V}_M$ et de courant instantané $\hat{I}_M$ de l'onduleur 8, le module 44 établit, lors d'une opération 124, la valeur de la composante $\hat{I}_d$ permettant de respecter ces limites.

Par exemple, si la consigne $\Gamma_{cm}$ augmente, la consigne de courant fondamental $\tilde{I}_q$ et la consigne de courant instantané $(\hat{I}_d, \hat{I}_q)$ augmente, ce qui, après les opérations 122, 124 et 96, conduit à un augmentation du module $\|\vec{V}\|$. Cette augmentation du module $\|\vec{V}\|$ conduit, par exemple, le module 28 à sélectionner un nouveau type de modulation de largeur d'impulsions correspondant à de nouvelles valeurs pour les angles $\alpha_i$. La sélection d'un nouveau type de modulation de largeur d'impulsions conduit également à générer des valeurs différentes pour les paramètres $\varepsilon(0)$ et $\delta(0)$. A partir de la nouvelle valeur de ces paramètres $\varepsilon(0)$ et $\delta(0)$, les modules 52 et 54 déterminent, lors de l'exécution suivante de l'opération 120, les nouvelles valeurs des composantes $\Delta I_q$, $\Delta I_d$, $\Delta J_q$ et $\Delta J_d$ permettant de corriger la consigne de courant instantané $(\hat{I}_d, \hat{I}_q)$, par exemple, en l'augmentant, pour que la moyenne entre deux instants de régulation du couple instantané soit égale à la consigne $\Gamma_{cm}$.

Ainsi, le procédé de la figure 3 permet de réguler le couple moyen du moteur en mettant en oeuvre un processus de commande à réponse pile. Il présente donc une grande dynamique. De plus, ici, le processus de commande à réponse pile est combiné à un processus de modulation de largeur d'impulsions synchrone, de sorte que certains rangs d'harmoniques spécifiques sont éliminés.

En variante, si la puissance de calcul est suffisante, à chaque instant de régulation, les opérations 122, 124, 96 et 98 sont réitérées plusieurs fois avant d'exécuter l'opération 100. Le fait de réitérer plusieurs fois les opérations 122, 124, 96 et 98 permet d'obtenir une valeur pour la consigne de courant $(\hat{I}_d, \hat{I}_q)$ plus précise. Ainsi, si le nombre d'itérations est suffisamment grand, la consigne $(\hat{I}_d, \hat{I}_q)$ est suffisamment précise pour permettre d'atteindre après un seul instant de régulation toute nouvelle valeur de la consigne de couple moyen $\Gamma_{cm}$, elle-même en variation rapide.

Le système 2 a été décrit, ici, dans le cas particulier où l'opération de commande à réponse pile est réalisée selon l'enseignement de la demande EP-A-123 35 06. Toutefois, en variante, un autre procédé de commande à réponse pile est mis en oeuvre, tel que par exemple un procédé basé sur des modes glissants, également connu sous les termes anglais de "sliding mode".

**Revendications**

1. Procédé de régulation du couple électromagnétique moyen d'une machine électrique tournante polyphasée équipée de bobinages statoriques et/ou rotoriques alimentés par une tension et un courant polyphasés générés par un onduleur, l'onduleur étant formé d'interrupteurs dont la commutation est commandable, ce procédé comportant :

- une étape (94) de commande de la commutation des interrupteurs en fonction d'une consigne de couple instantané, en mettant en oeuvre à cet effet un processus de commande à réponse pile de manière à ce que la consigne de couple instantané soit atteinte dès le prochain instant de régulation, et

- à chaque instant de régulation, une étape (92) de calcul, à partir d'une consigne de couple moyen, de la consigne de couple instantané à appliquer pour que la moyenne du couple électromagnétique instantané de la machine converge vers ladite consigne de couple moyen,

**caractérisé en ce qu'**il comporte une étape (110) de détermination de la valeur des harmoniques du courant et/ou de la tension générés par l'onduleur, et **en ce que**, lors de l'étape de calcul, la consigne de couple instantané est également établie (en 122, 124) en fonction de cette valeur des harmoniques de manière à produire une consigne de couple instantané propre à limiter l'écart entre la moyenne du couple électromagnétique instantané entre deux instants de régulation successifs, et ladite consigne de couple moyen.

2.  Procédé selon la revendication 1, **caractérisé en ce que** le processus de commande à réponse pile établit (en 96) une consigne de commande des interrupteurs par modulation de largeur d'impulsions, et **en ce que** l'étape de commande (94) comporte également, entre chaque instant de régulation, une opération (100) de commande de la commutation des interrupteurs en mettant en oeuvre un processus de modulation de largeur d'impulsions configuré en fonction de ladite consigne de commande établie par le processus de commande à réponse pile.

3.  Procédé selon la revendication 1 ou 2, **caractérisé en ce que** le processus de modulation de largeur d'impulsions est un processus de modulation de largeur d'impulsions synchrone avec la fréquence du fondamental de la tension générée par l'onduleur, et **en ce que** les instants de régulation sont espacés les uns des autres par un intervalle temporel égal à T'/2p , où p est le nombre de phases de la machine et T' est la période du fondamental de la tension générée par l'onduleur.

4.  Procédé selon la revendication 3, **caractérisé en ce que** le processus de commande à réponse pile est adapté pour qu'aux instants de régulation la phase du fondamental de la tension générée par l'onduleur soit égale à $\dfrac{k\pi}{p}$,

$k$ étant un nombre entier.

5.  Procédé selon l'une quelconque des revendications précédentes, **caractérisé en ce que** la valeur des harmoniques est établie, lors de l'étape de détermination (110), à partir de la valeur de la consigne de commande établie par le processus de commande à réponse pile à l'instant de régulation précédent.

6.  Procédé selon l'une quelconque des revendications 2 à 5 **caractérisé** :

    - **en ce que** le processus de modulation de largeur d'impulsions utilise successivement dans le temps plusieurs modulations différentes de largeur d'impulsions,
    - **en ce que** la valeur des harmoniques est établie à partir d'au moins un paramètre de calcul ($\varepsilon(0)$, $\delta(0)$), les différentes valeurs du ou de chaque paramètre étant calculées à l'avance et pré-enregistrées (en 80) pour chaque modulation différente de largeur d'impulsions susceptible d'être utilisée, et
    - **en ce que** la valeur du ou de chaque paramètre à utiliser lors de l'étape de détermination (110), est sélectionnée (en 98) en fonction de la valeur de la consigne de commande établie par le processus (en 96) de commande à réponse pile à l'instant de régulation précédent.

7.  Procédé selon la revendication 6, **caractérisé en ce qu'**un paramètre de calcul est défini par la relation suivante :

$$\varepsilon(0) = \left( \sum_{n=2}^{\infty} \frac{V_n}{n} \right)_0$$

où :

- $V_n$ est l'amplitude de l'harmonique de tension de rang n,

- n est un nombre entier correspondant au rang de l'harmonique.

8. Procédé selon la revendication 7, **caractérisé en ce que** la consigne de commande est un vecteur de tension défini, dans un repère orthonormé $\alpha, \beta$ fixe par rapport aux bobinages statoriques, par son module ($\|\vec{V}\|$) et un angle ($\beta_0$) et **en ce que** la valeur des harmoniques de courant est établie à partir de la relation suivante :

$$\Delta I_q = - \frac{\varepsilon(0)}{L.\omega}.\cos(\beta_0 - \rho_0)$$

où :

- L est l'inductance statorique de la machine électrique tournante,
- $\omega$ est la vitesse angulaire du rotor de la machine électrique tournante,
- $\beta_0$ est l'angle du vecteur de tension établi (en 96) à l'instant de régulation précédent par le processus de commande à réponse pile,
- $\Delta I_q$ est la valeur des harmoniques de courant le long de l'axe q dans un repère tournant d, q lié au flux rotorique, le flux rotorique étant aligné sur l'axe d, et
- $\rho_0$ est l'angle du repère d,q par rapport au repère fixe $\alpha,\beta$ lié aux bobines statoriques.

9. Procédé selon l'une quelconque des revendications 6 à 8, **caractérisé en ce qu'**un paramètre de calcul est défini par la relation suivante :

$$\delta(0) = \left( \sum_{n=2}^{\infty} V_n \right)$$

où Vn est l'amplitude de l'harmonique de tension de rang n.

10. Procédé selon l'une quelconque des revendications précédentes, **caractérisé en ce que** l'onduleur est alimenté à partir d'au moins une tension continue d'alimentation limitée en amplitude, et **en ce que**, lors de l'étape de calcul (92), la consigne de couple instantané est également établie (en 124) en fonction de la valeur instantanée ($\hat{V}_M$) de la tension continue disponible à l'instant de régulation, de manière à ce que la consigne de couple instantané corresponde à une tension continue disponible.

11. Procédé selon les revendications 8, 9 et 10, **caractérisé en ce que** la consigne de couple instantané est établie sous la forme d'une consigne de courant instantané ($\hat{I}_d, \hat{I}_q$) à l'aide des relations suivantes :

$$\left[\hat{I}_d - \hat{I}_{dc}\right]^2 + \left[\hat{I}_q - \hat{I}_{qc}\right]^2 \leq \frac{\hat{V}_M^2}{Z^2}$$

$$\hat{I}_d^2 + \hat{I}_q^2 \leq \hat{I}_M^2$$

où :

- $\hat{V}_M$ est la valeur instantanée de la tension maximale continue disponible pour alimenter l'onduleur (8),
- $\hat{I}_M$ est la valeur instantanée du courant maximal pouvant être généré par l'onduleur 8,
- $\hat{I}_q$ et $\hat{I}_d$ sont les composantes de la consigne du vecteur de courant instantané le long respectivement des axes q et d du repère d, q
- Z est défini par la relation suivante :

$$Z = \sqrt{R^2 + L^2 \cdot \omega^2},$$

où R est la résistance statorique de la machine, L est l'inductance statorique de la machine, et $\omega$ est la vitesse angulaire du rotor de la machine,

- $\hat{I}_{dc}$ et $\hat{I}_{qc}$ sont définis par les relations suivantes :

$$\hat{I}_{dc} = -\frac{L.\omega}{Z^2} \cdot \left\{ R.(\Delta I_q - \Delta J_q) - L.\omega.(\Delta I_d - \Delta J_d) + \omega.\Phi_a \right\}$$

$$\hat{I}_{qc} = -\frac{1}{Z^2} \cdot \left\{ R.\omega.\phi_a - R.L.\omega.(\Delta I_d - \Delta J_d) - L^2.\omega^2.(\Delta I_q - \Delta J_q) \right\}$$

où :

- $\Delta I_d$ et $\Delta I_q$ sont les composantes du vecteur de courant harmonique généré par l'onduleur (8), le long respectivement des axes d et q du repère d,q, et $\Delta J_q$ et $\Delta J_d$ sont des composantes proportionnelles au vecteur de tension harmonique généré par l'onduleur, respectivement le long des axes q et d du repère d, q, les composantes $\Delta I_d$, $\Delta J_q$ et $\Delta J_d$ étant définies par les relations suivantes :

$$\Delta I_d = +\frac{\varepsilon(0)}{L.\omega} \cdot \sin\left(\beta_0 - \rho_0\right)$$

$$\Delta J_d = \frac{\delta(0)}{L.\omega} \cdot \sin\left(\beta_0 - \rho_0\right)$$

$$\Delta J_q = -\frac{\delta(0)}{L.\omega} \cdot \cos\left(\beta_0 - \rho_0\right)$$

**12.** Support d'enregistrement d'informations (60), **caractérisé en ce qu'**il comporte des instructions pour l'exécution d'un procédé de régulation conforme à l'une quelconque des revendications précédentes, lorsque lesdites instructions sont exécutées par un calculateur électronique.

**13.** Structure de données, enregistrée dans une mémoire (32), apte à permettre la régulation du couple électromagnétique moyen d'une machine électrique tournante polyphasée (4) lorsqu'elle est utilisée selon un procédé conforme à l'une quelconque des revendications 1 à 11, **caractérisé en ce que** cette structure de données associe à chaque valeur particulière d'une consigne de commande ($\|\vec{V}\|$) établie par le processus de commande à réponse pile, plusieurs angles ($\alpha_i$) et la valeur d'au moins un paramètre de régulation ($\varepsilon(0)$, $\delta(0)$), l'ensemble des angles ($\alpha_i$) associés avec une même valeur de ladite consigne de commande, définissant une modulation particulière de largeur d'impulsions synchrone avec la fréquence du fondamental de la tension générée par l'onduleur (8), et la valeur dudit au moins un paramètre de régulation ($\varepsilon(0)$, $\delta(0)$) étant fonction de la valeur des harmoniques de courant et/ou de tension générés par l'onduleur commandé à l'aide de la modulation de largeur d'impulsions définie par les angles associés ($\alpha_i$) à la même valeur de la consigne de commande ($\|\vec{V}\|$).

**14.** Système de régulation du couple électromagnétique moyen d'une machine électrique tournante polyphasée équipée de bobinages statoriques et/ou rotoriques alimentés par une tension et un courant polyphasés générés par un onduleur (8), l'onduleur étant formé d'interrupteurs dont la commutation est commandable, ce système comportant :

- une unité (20) de commande de la commutation des interrupteurs en fonction d'une consigne de couple instantané, cette unité de commande étant apte à mettre en oeuvre à cet effet un processus de commande à réponse pile de manière à ce que la consigne de couple instantané soit atteinte dès le prochain instant de régulation, et
- une unité (22) de calcul, à partir d'une consigne de couple moyen, de la consigne de couple instantané à appliquer pour que la moyenne du couple électromagnétique instantané de la machine (4) converge vers ladite consigne de couple moyen,

**caractérisé en ce qu'**il comporte une unité (50) de détermination de la valeur des harmoniques du courant et/ou de la tension générés par l'onduleur (8), et **en ce que** l'unité de calcul (22) calcule la consigne de couple instantané également en fonction de cette valeur des harmoniques de manière à produire une consigne de couple instantané propre à limiter l'écart entre la moyenne du couple électromagnétique instantané entre deux instants de régulation successifs, et ladite consigne de couple moyen.

## Patentansprüche

1. Verfahren zum Regeln des mittleren elektromagnetischen Drehmoments einer elektrischen Polyphasen-Drehmaschine, ausgestattet mit Stator- und/oder Rotor-Wicklungen, die mit einer Polyphasen-Spannung und einem Polyphasen-Strom versorgt werden, die von einem Wechselrichter erzeugt werden, wobei der Wechselrichter durch Schalter gebildet ist, deren Schalten steuerbar ist, wobei das Verfahren aufweist:

   - einen Schritt (94) zum Steuern des Schaltens der Schalter in Abhängigkeit eines Sollwerts des momentanen Drehmoments durch Durchführen zu diesem Zweck eines Deadbeat-Steuerprozesses in der Art, dass der Sollwert des momentanen Drehmoments ab dem nächsten Regelungszeitpunkt erreicht ist, und
   - zu jedem Regelungszeitpunkt einen Schritt (92) zum Berechnen, ausgehend von einem Sollwert des mittleren Drehmoments, des Sollwerts des momentanen Drehmoments, der anzuwenden ist, damit das Mittel des momentanen Drehmoments der Maschine gegen den Sollwert des mittleren Drehmoments konvergiert,

   dadurch charakterisiert, dass es einen Schritt (110) des Ermittelns der Werte der Harmonischen des Stroms und/oder der Spannung, die von dem Wechselrichter erzeugt werden, aufweist, und dadurch, dass, bei dem Berechnungsschritt der Sollwert des momentanen Drehimpulses auch festgelegt wird (in 122, 124) in Abhängigkeit dieses Werts der Harmonischen auf die Art, dass ein Sollwert des momentanen Drehimpulses erzeugt wird, der dazu geeignet ist, die Abweichung zwischen dem Mittel des momentanen elektromagnetischen Drehimpulses zwischen zwei aufeinanderfolgenden Regelungszeitpunkten zu begrenzen, und des Sollwerts des mittleren Drehmoments.

2. Verfahren gemäß Anspruch 1, dadurch charakterisiert, dass der Deadbeat-Steuerprozess (in 96) einen Sollwert zum Steuern der Schalter durch Pulsweitenmodulation festlegt und dadurch, dass der Steuerschritt (94) auch aufweist, zwischen jedem Regelungszeitpunkt, eine Operation (100) zum Steuern des Schaltens der Schalter, indem ein Prozess zur Pulsweitenmodulation ausgeführt wird, der in Abhängigkeit des Steuer-Sollwerts, der von dem Deadbeat-Steuerprozess festgelegt wird, konfiguriert ist.

3. Verfahren gemäß Anspruch 1 oder 2, dadurch charakterisiert, dass der Pulsweitenmodulationsprozess ein Pulsweitenmodulationsprozess ist, der synchron ist mit der Grundschwingung der von dem Wechselrichter erzeugten Spannung, und dadurch, dass die Regelzeitpunkte voneinander den Abstand eines Zeitintervalls T'/2p haben, wobei p die Anzahl der Phasen der Maschine ist und T' die Periode der Grundschwingung der von dem Wechselrichter erzeugten Spannung ist.

4. Verfahren gemäß Anspruch 3, dadurch charakterisiert, dass der Deadbeat-Steuerprozess eingerichtet ist, sodass an den Regelungszeitpunkten die Phase der Grundschwingung der von dem Wechselrichter erzeugten Spannung

   gleich $\dfrac{k\pi}{p}$ ist, wobei k eine ganze Zahl ist.

5. Verfahren gemäß einer der vorhergehenden Ansprüche, dadurch charakterisiert, dass der Wert der Harmonischen beim Ermittlungsschritt (110) ausgehend von dem Wert des Steuer-Sollwerts festgelegt wird, der von dem Deadbeat-Steuerprozess zum vorhergehenden Regelungszeitpunkt festgelegt wird.

6. Verfahren gemäß einem der Ansprüche 2 bis 5, charakterisiert:

   - dadurch, dass der Pulsweitenmodulationsprozess aufeinanderfolgend in der Zeit mehrere unterschiedliche Pulsweitenmodulationen verwendet,

- dadurch, dass der Wert der Harmonischen ausgehend von mindestens einem Berechnungsparameter ($\varepsilon(0)$, $\delta(0)$) festgelegt wird, wobei die unterschiedlichen Werte des oder jedes Parameters im Voraus berechnet werden und (in 80) für jede unterschiedliche Pulsweitenmodulation, die dafür geeignet ist, verwendet zu werden, vorgespeichert wird, und

- dadurch, dass der Wert des oder jedes bei dem Ermittlungsschritt (110) zu verwendenden Parameters (in 98) in Abhängigkeit des Werts des Steuer-Sollwerts ausgewählt wird, der von dem Deadbeat-Steuerprozess (in 96) zum vorhergehenden Regelungszeitpunkt festgelegt wird.

**7.** Verfahren gemäß Anspruch 6, dadurch charakterisiert, dass ein Berechnungsparameter durch die folgende Beziehung definiert ist:

$$\varepsilon(0) = \left( \sum_{n=2}^{\infty} \frac{V_n}{n} \right)_0$$

wobei

- $V_n$ die Amplitude der Harmonischen der Spannung vom Rang n ist,
- n eine ganze Zahl ist, die dem Rang der Harmonischen entspricht.

**8.** Verfahren gemäß Anspruch 7, dadurch charakterisiert, dass der Steuer-Sollwert ein Spannungsvektor ist, definiert, in einem orthonormierten Koordinatensystem $\alpha$, $\beta$, das fest bezüglich der Stator-Wicklungen ist, durch seinen Betrag ($\|\vec{V}\|$) und einen Winkel ($\beta_0$), und dadurch, dass der Wert der Strom-Harmonischen ausgehend von der folgenden Beziehung festgelegt wird:

$$\Delta I_q = -\frac{\varepsilon(0)}{L \cdot \omega} \cdot \cos(\beta_0 - \rho_0)$$

wobei:

- L die Statorinduktivität der elektrischen Drehmaschine ist,
- $\omega$ die Winkelgeschwindigkeit des Rotors der elektrischen Drehmaschine ist,
- $\beta_0$ der Winkel des (in 96) durch den Deadbeat-Steuerprozess zum vorhergehenden Regelungszeitpunkt festgelegten Spannungsvektors ist,
- $\Delta I_q$ der Wert der Strom-Harmonischen entlang der Achse q in einem drehenden Koordinatensystem d, q ist, das mit dem Rotor-Fluss verknüpft ist, wobei der Rotor-Fluss auf die Achse d ausgerichtet ist, und
- $\varphi_0$ der Winkel des Koordinatensystems d, q bezüglich des festen Koordinatensystems $\alpha$, $\beta$ ist, das mit den Stator-Wicklungen verknüpft ist.

**9.** Verfahren gemäß einem der Ansprüche 6 bis 8, dadurch charakterisiert, dass ein Berechnungsparameter durch die folgende Beziehung definiert ist:

$$\delta(0) = \left( \sum_{n=2}^{\infty} V_n \right)$$

wobei $V_n$ die Amplitude der Spannungs-Harmonischen vom Rang n ist.

**10.** Verfahren gemäß einem der vorhergehenden Ansprüche, dadurch charakterisiert, dass der Wechselrichter ausgehend von mindestens eine Versorgungsgleichspannung versorgt wird, deren Amplitude begrenzt ist, und dadurch, dass beim Berechnungsschritt (92) der Sollwert des momentanen Drehmoments auch (in 124) in Abhängigkeit von dem momentanen Wert ($\hat{V}_M$) der Gleichspannung, die zum Regelungszeitpunkt verfügbar ist, festgelegt wird, in der Art, dass der Sollwert des momentanen Sollwerts einer verfügbaren Gleichspannung entspricht.

**11.** Verfahren gemäß den Ansprüchen 8, 9 und 10, dadurch charakterisiert, dass der Sollwert des momentanen Drehmoments in der Form eines Sollwerts des momentanen Stroms $(\hat{I}_d, \hat{I}_q)$ mit Hilfe der folgenden Beziehungen festgelegt wird:

$$\left[\hat{I}_d - \hat{I}_{dc}\right]^2 + \left[\hat{I}_q - \hat{I}_{qc}\right]^2 \leq \frac{\hat{V}_M^2}{Z^2}$$

$$\hat{I}_d^2 + \hat{I}_q^2 \leq \hat{I}_M^2$$

wobei

- $\hat{V}_M$ der momentane Wert der maximalen Gleichspannung ist, die zum Versorgen des Wechselrichters (8) verfügbar ist,
- $\hat{I}_M$ der momentane Wert des maximalen Stroms ist, der durch den Wechselrichter 8 erzeugt werden kann,
- $\hat{I}_q$ und $\hat{I}_d$ die Komponenten des Sollwerts des momentanen Stromvektors entlang der Achsen q bzw. d des Koordinatensystems d, q sind
- Z durch die folgende Beziehung definiert ist:

$$Z = \sqrt{R^2 + L^2 \cdot \omega^2} \quad ,$$

wobei R der Statorwiderstand der Maschine ist, L die Statorinduktivität der Maschine ist und $\omega$ die Winkelgeschwindigkeit des Rotors der Maschine ist,
- $\hat{I}_{dc}$ und $\hat{I}_{qc}$ durch die folgenden Beziehungen definiert sind:

$$\hat{I}_{dc} = -\frac{L.\omega}{Z^2} . \left\{ R.(\Delta I_q - \Delta J_q) - L.\omega.(\Delta I_d - \Delta J_d) + \omega.\Phi_a \right\}$$

$$\hat{I}_{qc} = -\frac{1}{Z^2} . \left\{ R.\omega.\phi_a - R.L.\omega.(\Delta I_d - \Delta J_d) - L^2 \cdot \omega^2 \cdot (\Delta I_q - \Delta J_q) \right\}$$

wobei

- $\Delta I_d$ und $\Delta I_q$ die Komponenten des Vektors des von dem Wechselrichter (8) erzeugten harmonischen Stroms entlang der Achsen q bzw. d des Koordinatensystems d, q sind und $\Delta J_d$ und $\Delta J_q$ Komponenten sind, die proportional zum Vektor des von dem Wechselrichter (8) erzeugten harmonischen Spannung entlang der Achsen q bzw. d des Koordinatensystems d, q sind, wobei die Komponenten $\Delta I_d$, $\Delta J_q$ und $\Delta J_d$ durch die folgenden Beziehungen definiert sind:

$$\Delta I_d = +\frac{\varepsilon(0)}{L.\omega} . \sin(\beta_0 - \rho_0)$$

$$\Delta J_d = \frac{\delta(0)}{L.\omega} . \sin(\beta_0 - \rho_0)$$

$$\Delta J_q = -\frac{\delta(0)}{L.\omega} . \cos(\beta_0 - \rho_0)$$

**12.** Informationsspeicherträger (60), dadurch charakterisiert, dass er Instruktionen zur Ausführung eines Verfahrens zum Regeln gemäß einem der vorhergehenden Ansprüche, wenn die Instruktionen durch einen elektronischen Rechner ausgeführt werden, aufweist.

**13.** Datenstruktur, gespeichert in einem Speicher (32), dazu geeignet, das Regeln des mittleren elektromagnetischen Drehmoments einer elektrischen Polyphasen-Drehmaschine (4) zu ermöglichen, wenn sie gemäß einem Verfahren gemäß einem der Ansprüche 1 bis 11 verwendet wird, dadurch charakterisiert, dass diese Datenstruktur jedem speziellen Wert eines Steuer-Schwellwerts ($\|\vec{V}\|$), der durch den Deadbeat-Steuerprozess festgelegt wird, mehrere Winkel ($\alpha_i$) und den Wert mindestens eines Regelparameters ($\varepsilon(0)$, $\delta(0)$) zuordnet, wobei die Menge von Winkeln, ($\alpha_i$), die demselben Wert des Steuer-Sollwerts zugeordnet sind, eine spezielle Pulsweitenmodulation definieren, die synchron zu der Frequenz der Grundschwingung des von dem Wechselrichter (8) erzeugten Spannung ist, und wobei der Wert des mindestens einen Regelparameters ($\varepsilon(0)$, $\delta(0)$) von dem Wert der Stromharmonischen und/oder Spannungsharmonischen abhängt, die von dem Wechselrichter erzeugt werden, der mit Hilfe der Pulsweitenmodulation gesteuert wird, die durch die Winkel ($\alpha_i$) definiert ist, die demselben Wert des Steuer-Sollwerts ($\|\vec{V}\|$) zugeordnet sind.

**14.** System zum Regeln des mittleren elektromagnetischen Drehmoments einer elektrischen Polyphasen-Drehmaschine, ausgestattet mit Stator- und/oder Rotor-Wicklungen, die mit einer Polyphasen-Spannung und einem Polyphasen-Strom versorgt werden, die von einem Wechselrichter erzeugt werden, wobei der Wechselrichter durch Schalter gebildet ist, deren Schalten steuerbar ist, wobei das Verfahren aufweist:

- einen Einheit (20) zum Steuern des Schaltens der Schalter in Abhängigkeit eines Sollwerts des momentanen Drehmoments, wobei die Steuereinheit eingerichtet ist, zu diesem Zweck einen Deadbeat-Steuerprozesses in der Art durchzuführen, dass der Sollwert des momentanen Drehmoments ab dem nächsten Regelungszeitpunkt erreicht ist, und
- eine Einheit (22) zum Berechnen, ausgehend von einem Sollwert des mittleren Drehmoments, des Sollwerts des momentanen Drehmoments, der anzuwenden ist, damit das Mittel des momentanen Drehmoments der Maschine (4) gegen den Sollwert des mittleren Drehmoments konvergiert,

dadurch charakterisiert, dass es eine Einheit (50) zum Ermitteln der Werte der Harmonischen des Stroms und/oder der Spannung, die von dem Wechselrichter erzeugt werden, aufweist, und dadurch, dass die Berechnungseinheit (22) den Sollwert des momentanen Drehimpulses auch berechnet in Abhängigkeit dieses Werts der Harmonischen auf die Art, dass ein Sollwert des momentanen Drehimpulses erzeugt wird, der dazu geeignet ist, die Abweichung zwischen dem Mittel des momentanen elektromagnetischen Drehimpulses zwischen zwei aufeinanderfolgenden Regelungszeitpunkten zu begrenzen, und des Sollwerts des mittleren Drehmoments.

**Claims**

**1.** A method for regulating the average electromagnetic torque of a polyphase rotating electrical machine equipped with stator and/or rotor windings, which are supplied with a polyphase voltage and a polyphase current that are generated by an inverter, the inverter being formed by switches whose switching is controllable, this method including:

- a control step (94) of switching the switches as a function of an instantaneous torque set point, using an exact response control process to do this so that the instantaneous torque set point is reached as soon as the next regulation time, and
- a step (92) at each regulation time of calculating, from an average torque set point, the instantaneous torque set point to be applied so that the average of the instantaneous electromagnetic torque of the machine converges toward said average torque set point,

**characterized in that** it includes a step (110) of determining the value of the harmonics of the voltage and/or the current which are generated by the inverter, and **in that** the instantaneous torque set point is also established (at 122, 124) during the calculation step as a function of this value of the harmonics, so as to produce an instantaneous torque set point suitable for limiting the difference between the average of the instantaneous electromagnetic torque, between two successive regulation times, and said average torque set point.

**2.** The method according to claim 1, **characterized in that** the exact response control process establishes (at 96) a set point for controlling the switches by pulse width modulation, and **in that** the control step (94) also includes a control operation (100) of switching the switches between each regulation time, employing a pulse width modulation process configured as a function of said control set point established by the exact response control process.

3. The method according to claim 1 or 2, **characterized in that** the pulse width modulation process is a pulse width modulation process synchronous with the frequency of the fundamental of the voltage generated by the inverter, and **in that** the regulation times are spaced apart by a time interval equal to T'/2p, where p is the number of phases of the machine and T' is the period of the fundamental of the voltage generated by the inverter.

4. The method according to claim 3, **characterized in that** the exact response control process is adapted so that the phase of the fundamental of the voltage generated by the inverter at the regulation times is equal to $\dfrac{k\pi}{p}$, k being an integer.

5. The method according to any one of the preceding claims, **characterized in that** the value of the harmonics is established, during the determination step (110), from the value of the control set point established by the exact response control process at the preceding regulation time.

6. The method according to any one of claims 2 to 5, **characterized**:

   - **in that** the pulse width modulation process successively uses a plurality of different pulse width modulations over time,
   - **in that** the value of the harmonics is established from at least one calculation parameter ($\varepsilon(0)$, $\delta(0)$), the various values of the or each parameter being calculated in advance and prerecorded (at 80) for each different pulse width modulation liable to be used, and
   - **in that** the value of the or each parameter to be used during the determination step (110) is selected (at 98) as a function of the value of the control set point established by the exact response control process (at 96) at the preceding regulation time.

7. The method according to claim 6, **characterized in that** a calculation parameter is defined by the following relationship:

$$\varepsilon(0) = \left( \sum_{n=2}^{\infty} \frac{V_n}{n} \right)_0$$

where:

   - $V_n$ is the amplitude of the voltage harmonic of order n,
   - n is an integer corresponding to the order of the harmonic.

8. The method according to claim 7, **characterized in that** the control set point is a voltage vector defined, in an orthonormal reference frame $\alpha$, $\beta$ which is fixed with respect to the stator windings, by its modulus ($\|\vec{V}\|$) and an angle ($\beta_0$), and **in that** the value of the current harmonics is established from the following relationship:

$$\Delta I_q = -\frac{\varepsilon(0)}{L.\omega}.\cos(\beta_0 - \rho_0)$$

where:

   - L is the stator inductance of the rotating electrical machine,
   - $\omega$ is the angular velocity of the rotor of the rotating electrical machine,
   - $\beta_0$ is the angle of the voltage vector established (at 96) at the preceding regulation time by the exact response

control process,

- $\Delta I_q$ is the value of the current harmonics along the axis q in a rotating reference frame d,q associated with the rotor flux, the rotor flux being aligned with the axis d, and
- $\rho_0$ is the angle of the reference frame d,q with respect to the fixed reference frame $\alpha, \beta$ associated with the stator windings.

**9.** The method according to any one of claims 6 to 8, **characterized in that** a calculation parameter is defined by the following relationship:

$$\delta(0) = \left( \sum_{n=2}^{\infty} V_n \right)$$

where Vn is the amplitude of the voltage harmonic of order n.

**10.** The method according to any one of the preceding claims, **characterized in that** the inverter is supplied from at least one amplitude-limited direct current supply voltage, and wherein the instantaneous torque set point is also established (at 124) during the calculation step (92) as a function of the instantaneous value ($\hat{V}_M$) of the direct current voltage available at the regulation time, so that the instantaneous torque set point corresponds to an available direct current voltage.

**11.** The method according to claims 8, 9 and 10, **characterized in that** the instantaneous torque set point is established in the form of an instantaneous current set point ($\hat{I}_d, \hat{I}_q$) with the aid of the following relationships:

$$\left[ \hat{I}_d - \hat{I}_{dc} \right]^2 + \left[ \hat{I}_q - \hat{I}_{qc} \right]^2 \leq \frac{\hat{V}_M^2}{Z^2}$$

$$\hat{I}_d^2 + \hat{I}_q^2 \leq \hat{I}_M^2$$

where:

- $\hat{V}_M$ is the instantaneous value of the maximum direct current voltage available for supplying the inverter (8),
- $\hat{I}_M$ is the instantaneous value of the maximum current that can be generated by the inverter 8,
- $\hat{I}_q$ and $\hat{I}_d$ are the components of the set point of the instantaneous current vector respectively along the axes q and d of the reference frame d,q
- Z is defined by the following relationship:

$$Z = \sqrt{R^2 + L^2 \cdot \omega^2} \, ,$$

where R is the stator resistance of the machine, L is the stator inductance of the machine and $\omega$ is the angular velocity of the rotor of the machine,
- $\hat{I}_{dc}$ and $\hat{I}_{qc}$ are defined by the following relationships:

$$\hat{I}_{dc} = -\frac{L.\omega}{Z^2} . \left\{ R.(\Delta I_q - \Delta J_q) - L.\omega.(\Delta I_d - \Delta J_d) + \omega.\Phi_a \right\}$$

$$\hat{I}_{qc} = -\frac{1}{Z^2} . \left\{ R.\omega.\phi_a - R.L.\omega.(\Delta I_d - \Delta J_d) - L^2.\omega^2.(\Delta I_q - \Delta J_q) \right\}$$

where:

- $\Delta I_d$ and $\Delta I_q$ are the components of the harmonic current vector generated by the inverter (8), respectively along the axes d and q of the reference frame d,q, and $\Delta J_q$ and $\Delta J_d$ are components proportional to the harmonic voltage vector generated by the inverter, respectively along the axes q and d of the reference frame d,q, the components $\Delta I_d$, $\Delta J_q$ and $\Delta J_d$ being defined by the following relationships:

$$\Delta I_d = +\frac{\varepsilon(0)}{L.\omega}.\sin\left(\beta_0 - \rho_0\right)$$

$$\Delta J_d = \frac{\delta(0)}{L.\omega}.\sin\left(\beta_0 - \rho_0\right)$$

$$\Delta J_q = -\frac{\delta(0)}{L.\omega}.\cos\left(\beta_0 - \rho_0\right)$$

12. An information storage medium (60), **characterized in that** it includes instructions for carrying out a regulation method as claimed in any one of the preceding claims, when said instructions are carried out by an electronic computer.

13. A data structure stored in a memory (32), capable of making it possible to regulate the average electromagnetic torque of a polyphase rotating electrical machine (4) when it is used in a method as claimed in any one of claims 1 to 11, **characterized in that** said data structure associates a plurality of angles ($\alpha_i$) and the value of at least one regulation parameter ($\varepsilon(0)$, $\delta(0)$), with each particular value of a control set point ($\|\vec{V}\|$) established by the exact response control process, the set of angles ($\alpha_i$) associated with a given value of said control set point defining a particular pulse width modulation synchronous with the frequency of the fundamental of the voltage generated by the inverter (8), and the value of said at least one regulation parameter ($\varepsilon(0)$, $\delta(0)$) being a function of the value of the current and/or voltage harmonics which are generated by the inverter, when it is controlled with the aid of the pulse width modulation defined by the angles ($\alpha_i$) associated with the same value of the control set point ($\|\vec{V}\|$).

14. A system for regulating the average electromagnetic torque of a polyphase rotating electrical machine equipped with stator and/or rotor windings, which are supplied with a polyphase voltage and a polyphase current that are generated by an inverter (8), the inverter being formed by switches whose switching is controllable, this system including:

- a control unit (20) for the switching of the switches as a function of an instantaneous torque set point, this control unit being capable of using an exact response control process to do this so that the instantaneous torque set point is reached as soon as the next regulation time, and
- a unit (22) for calculating, from an average torque set point, the instantaneous torque set point to be applied so that the average of the instantaneous electromagnetic torque of the machine (4) converges toward said average torque set point,

**characterized in that** it includes a unit (50) for determining the value of the harmonics of the voltage and/or the current which are generated by the inverter (8), and wherein the calculation unit (22) also calculates the instantaneous torque set point as a function of this value of the harmonics, so as to produce an instantaneous torque set point suitable for limiting the difference between the average of the instantaneous electromagnetic torque, between two successive regulation times, and said average torque set point.

**FIG.1**

EP 1 484 836 B1

**FIG.2**

**FIG.4**

EP 1 484 836 B1

EP 1 484 836 B1

**_FIG.3_**

26

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1211798 A2
- EP 1292011 A1
- EP 1233506 A